# EUROPÄISCHE PATENTSCHRIFT

(11) **EP 1 917 391 B1**
(45) Veröffentlichungstag und Bekanntmachung des Hinweises auf die Patenterteilung: **17.07.2013**
(21) Anmeldenummer: 06777043.8
(22) Anmeldetag: 23.08.2006
(51) Int. Cl.: D04H 13/00, E04B 1/74, C03B 37/00

(54) **ANORGANISCHES MISCHFASERPRODUKT MIT ANORGANISCHEN FASERFLOCKEN UND GLASWOLLEFASERN**
INORGANIC MIXED FIBRE PRODUCT CONTAINING FIBRE FLOCKS AND GLASS WOOL FIBRES
PRODUIT DE FIBRES MIXTES ANORGANIQUE CONTENANT DES FLOCONS DE FIBRES ET DES FIBRES DE LAINE VERRE

(30) Priorität: 24.08.2005 DE 102005040076
(43) Veröffentlichungstag der Anmeldung: 07.05.2008
(73) Patentinhaber: SAINT-GOBAIN ISOVER G+H AG, 67059 Ludwigshafen (DE)
(72) Erfinder: MEYER, Jens, 69493 Hirschberg (DE); WEIGERT, Thomas, Plains, PA 18705 (US); ZYSIK, Anton, 51515 Kürten-Bechen (DE)
(74) Vertreter: Kuhnen & Wacker
(86) Internationale Anmeldenummer: PCT/EP2006/008292
(87) Internationale Veröffentlichungsnummer: WO 2007/022974

(56) Entgegenhaltungen:
- WO-A-2005/080659
- WO-A1-03/060218
- DE-A1- 10 359 902
- DE-A1- 19 612 711
- US-A1- 2004 176 003

## Beschreibung

Die vorliegende Erfindung betrifft ein anorganisches Mischfaserprodukt, welches sowohl Glaswolle als auch anorganische Faserflocken aufweist und erfindungsgemäß auch eine Mineralwolle sein kann, gemäß dem Anspruch 1, sowie ein Verfahren zum Herstellen dieses anorganischen Mischfaserprodukts gemäß dem Anspruch 9. Die Erfindung betrifft ferner Erzeugnisse gemäß der Ansprüche 8 und 15, welche unter Verwendung des erfindungsgemäßen anorganischen Mischfaserprodukts bzw. des erfindungsgemäßen Verfahrens hergestellt wurden, und eine Vorrichtung gemäß dem Anspruch 16 zur Durchführung des erfindungsgemäßen Verfahrens.

Aus der Praxis sind zwei Arten von Mineralwolleprodukten bekannt. Zum einen sind Glaswolleprodukte bekannt, die im wesentlichen aus Glaswollefasern bestehen und aufgrund der Glaswollefasem gute Dämmeigenschaften aufweisen. Zudem sind Steinwolleprodukte bekannt, welche im wesentlichen Steinwollefasern aufweisen und sich deshalb durch eine besondere Temperaturbeständigkeit, insbesondere durch einen Schmelzpunkt größer 1000 °C (bestimmt nach DIN 4102 Teil 17) und eine besondere Beständigkeit gegen Einwirkung von Feuer im Brandfall auszeichnen.

In der Praxis werden an eine Dämmung mehrere, sich mitunter ausschließende Anforderungen gestellt, wobei die Gewichtung der einzelnen Anforderungen von der beabsichtigten Verwendung abhängt. So können für verschiedene Anwendungen von Mineralwolledämmstoffen ein Schmelzpunkt von größer 1000°C bei gleichzeitig bestmöglicher Dämmung gefordert sein, wie beispielsweise bei beengten räumlichen Bedingungen bei Rohrleitungen mit nebeneinander liegenden Strängen. In der Praxis besteht daher ein großes Interesse an Mineralwolleprodukten, welche die Dämmeigenschaften der Glaswolle mit der Temperaturbeständigkeit der Steinwolle kombinieren.

Eine gleichzeitige Verwendung von Glaswolle- als auch von Steinwolleanteilen bei der Herstellung beispielsweise einer Mineralwolledämmplatte ist beispielsweise aus der DE 196 12 711 A1 bekannt. Aus diesem Dokument ist ein Verfahren zum Einbringen von Zuschlagmaterial in ein Mineralwollevlies bekannt. Zwar kann mit diesem Verfahren ein Mineralwollemischprodukt mit Glaswolle- und Steinwolleanteilen hergestellt werden, jedoch wurde in der Vergangenheit keine solche Mineralwolle mit einerseits guter Dämmeigenschaft und andererseits ausreichender Feuerbeständigkeit hergestellt. Die nach dem Verfahren hergestellten Produkte verhielten sich bislang im Schmelzverhalten vergleichbar einem reinen Glaswolleerzeugnis, was seine Ursache darin hatte, dass die Glaswollefasem unter der Wärmeeinwirkung schmolzen und die wollartige Struktur in sich zusammensackte. Die ebenfalls in den untersuchten Mineralwolleprodukten vorhandenen Steinwollefasern führten zu keiner erhöhten Feuerfestigkeit der Mineralwolleprodukte. In einem Brandfall hätte dies zu einem völligen Zusammenfallen und Aufreißen der der Wärme ausgesetzten Mineralwollebahn geführt.

Aufgabe der vorliegenden Erfindung ist es daher, ein anorganisches Mischfaserprodukt derart anzugeben, daß ein aus diesem anorganischen Mischfaserprodukt hergestelltes Produkt auch noch zu einem Zeitpunkt nach dem Schmelzen der Glaswollefasem bei Temperaturbeaufschlagung seine Form im wesentlichen beibehält.

Ein weiteres Ziel der vorliegenden Erfindung besteht darin, ein Verfahren zum Herstellen des erfindungsgemäßen anorganischen Mischfaserprodukts anzugeben. Ferner ist es ein erfindungsgemäßes Ziel, ein aus einem erfindungsgemäßen anorganischen Mischfaserprodukt hergestelltes Erzeugnis sowie eine Vorrichtung zum Durchführen des erfindungsgemäßen Verfahrens anzugeben.

Die erfindungsgemäße Aufgabe wird gelöst durch ein anorganisches Mischfaseiprodukt gemäß dem Anspruch 1. Vorteilhafte Weiterbildungen des erfindungsgemäßen anorganischen Mischfaserprodukts sind jeweils Gegenstand der Unteransprüche.

Die Erfindung schlägt ein anorganisches Mischfaserprodukt vor, welche vorzugsweise für die Herstellung von Dämmmaterial geeignet ist, wobei das anorganische Mischfaserprodukt zumindest Glaswollefasem, anorganische Faserflocken sowie Bindemittel aufweist. Die anorganischen Faserflocken liegen beim erfindungsgemäßen anorganischen Mischfaserprodukt in bzw. zwischen den Glaswollebestandteilen eingebettet, wobei die anorganischen Faserflocken im Wesentlichen homogen zwischen den Glaswollefasem des anorganischen Mischfaserprodukts angeordnet sind. Je nach Auswahl der Bestandteile des anorganischen Mischfaserprodukts kann dieses auch eine Mineralwolle sein.

Die Erfinder haben erkannt, dass die Flockenform und -größe der anorganischen Faserflocken und die Art deren Einbettung in der Glaswollematrix Eigenschaften des erfindungsgemäßen anorganischen Mischfaserprodukts wie deren Temperaturbeständigkeit mitbestimmen. Wird das erfindungsgemäße anorganische Mischfaserprodukt beispielsweise in einem Versuch zur Bestimmung des Schmelzpunkts größer 1000 °C oder im Brandfall erhitzt, so erreicht das "Mischprodukt" aus Fasern und Flocken nach einer gewissen Zeit die Temperatur, bei welcher die Glasfasern zu schmelzen beginnen. Auch bei Überschreiten dieser Temperatur kommt es dann überraschender Weise zu Sintereffekten zwischen der schmelzenden bzw. bereits geschmolzenen Glaswolle und den anorganischen Faserflocken, deren Schmelzpunkt vorzugsweise höher als jener der Glaswollefasem liegt, wodurch das anorganische Mischfaserprodukt als Ganzes auch oberhalb des Schmelzpunktes der Glaswollefaser ihre Festigkeit behält. Anders ausgedrückt bleibt also ein Stützgerüst aus mit versinterter Glaswolle verbundenen anorganischen Faserflocken stehen. Aufgrund dieser Verbindung zwischen "Glaswollefaser" und anorganischen Faserflocken als Gerüst bzw. Stütze verbleibt die anorganische Mischfaserproduktbahn deutlich länger in ihrer ursprünglichen Form als dies derzeit bei Glaswollefasern enthaltenen Mineralwollebahnen der Fall ist. Das Problem eines Formverlustes bzw. Auflösens des Dämmstoffes ist somit vermieden.

Vorteilhaft für diese die Form des Dämmstoffs aufrecht erhaltende Stützwirkung der anorganischen Faserflocken ist deren homogene Verteilung zwischen den Glaswollefasem. Diese homogene Verteilung ist im Stand der Technik nicht bekannt. Ein beispielhaftes Verfahren, mit welchem die geforderte Homogenität der Verteilung erzielt werden kann, wird weiter unten ausführlich diskutiert. Zur Kontrolle, ob die gewünschte Homogenität der Verteilung erreicht ist, kann eine makroskopische Kontrolle mit bloßem Auge erfolgen. Beide Faserarten (Glaswollefasern und anorganische Faserflocken) unterscheiden sich oftmals farblich. Glaswollefasern sind farblos, anorganische Faserflocken können beispielsweise bräunlich sein, wenn sie - als ein Beispiel für anorganische Faserflocken - Steinwolle aufweisen. Insbesondere vor dem Aushärten des Bindemittels sind die Komponenten daher mit bloßem Auge gut zu unterscheiden und eine Verteilung beider Faserarten leicht zu beurteilen.

Für eine automatisierte Prüfung der Verteilung der anorganischen Faserflocken im Endprodukt kann das unterschiedliche Absorptionsverhalten von Licht genutzt werden. Zonen mit erhöhtem Anteil an anorganischen Faserflocken bewirken eine höhere Lichtadsorption als andere Zonen. Aufgrund dieser Eigenschaft ist beispielsweise eine "Durchlichtmessung" mit einer VCD-Zeilenkamera und eine auf den hierbei erzielten Ergebnissen erfolgende Beurteilung der gegebenen Homogenität möglich.

In einer bevorzugten Ausführungsform beträgt der Durchmesser der anorganischen Faserflocken im Rohvlies des erfindungsgemäßen anorganischen Mischfaserprodukts zwischen 5 mm und 30 mm. Besonders bevorzugt ist hierbei ein Durchmesser zwischen 8 mm und 12 mm gewählt. Bei einem solchen Durchmesser der anorganischen Faserflocken liegt eine besonders bevorzugte spezifische Oberfläche vor, denn die Größe der anorganischen Faserflocken bzw. ihr Durchmesser beeinflussen maßgeblich das Bindungsverhalten zwischen den geschmolzenen Glaswollefaser und den beständigeren anorganischen Faserflocken nach Temperaturbeaufschlagung.

In einer weiter bevorzugten Ausführungsform wurde zumindest ein Teil der in des erfindungsgemäßen anorganischen Mischfaserprodukts enthaltenen anorganischen Faserflocken aus entsprechendem Recyclingmaterial erhalten. Die hiermit verbundenen Vorteile umfassen eine Einsparung der oftmals erheblichen Entsorgungskosten des ansonsten einem Recyclingverfahren zuzuführenden Ausgangsmaterials für die anorganischen Faserflocken sowie eine hochwertige Verwertung. Für das als anorganische Faserflocken im erfindungsgemäßen anorganischen Mischfaserprodukt verarbeitete Material entfällt eine kostenpflichtige, teure Deponierung.

In einer weiter bevorzugten Ausführungsform beträgt das Volumen der anorganischen Faserflocken etwa das Einfache bis das Siebenfache des Volumens der Glaswolle des anorganischen Mischfaserprodukts, entsprechend einem Volumenanteil der anorganischen Faserflocken am erfindungsgemäßen anorganischen Mischfaserprodukt von etwa 50 Vol.-% bis 87,5 Vol.%. Diese Volumenverhältnisse zwischen Glaswolle und anorganischen Faserflocken haben sich in Versuchen der Anmelderin als besonders geeignet für die Ausbildung guter Stützstrukturen und somit für den Formerhalt im Brandfall erwiesen. Zudem weist das erfindungsgemäße anorganische Mischfaserprodukt unter Berücksichtigung dieses Verhältnisses zwischen Glaswolle und anorganischen Faserflocken gute Dämmeigenschaften im Alltag auf. Sollte die oben mit 1000 C angegebene Temperaturanforderung jedoch niedriger als 1000 °C sein, so kann auch ein Volumenanteil an anorganischen Faserflocken im erfinderischen anorganischen Mischfaserprodukt von weniger als 50 Vol.-% bis 87,5 Vol.-% ausreichend sein und ist von der Erfindung ebenfalls umfaßt. Ein solcher Volumenanteil kann 10, 15, 20, 25, 30, 35, 40, 45 Vol-% oder Zwischenwerte hiervon betragen.

In einer wiederum weiter bevorzugten Ausführungsform werden Steinwolleflocken als anorganische Faserflocken verwendet. Diese erhöhen die Temperaturbeständigkeit des erfindungsgemäßen anorganischen Mischfaserprodukts beachtlich, wie dies dem Fachmann bekannt ist. Steinwolleflocken weisen ferner alle oben im Zusammenhang mit anorganischen Faserflocken diskutierten Vorteile auf. Alles oben Gesagte trifft auch auf Steinwolleflocken als anorganische Faserflocken zu. Dasselbe gilt, wenn Glaswolleflocken, Flocken aus E-Glas-Fasern, Flocken aus Keramikersatzfasern (sog. AES-Fasern) oder Keramikfasern verwendet werden. .Dasselbe gilt auch, wenn anorganische Faserflocken verwendet werden, welche aus Kombinationen verschiedener anorganischer Faserarten bestehen oder solche aufweisen (Beispiel: anorganische Faserflocken mit Anteilen an Steinwolleflocken und Keramikflocken).

Die erfindungsgemäße Aufgabe wird ferner durch das Verfahren nach Anspruch 9 gelöst. Vorteilhafte Weiterbildungen des erfinderischen Verfahrens sind jeweils Gegenstand der entsprechenden Unteransprüche.

So schlägt die Erfindung ein Verfahren zum Herstellen eines anorganischen Mischfaserprodukts aus Glaswolle und anorganischen Faserflocken vor, wobei die Herstellung der Glaswollefaser im wesentlichen mittels eines TEL-Verfahrens erfolgt. Die anorganischen Faserflocken werden den Glaswollefasem erfindungsgemäß in einem Fallschacht derart zugegeben, daß die anorganischen Faserflocken im wesentlichen homogen zwischen den Glaswollebestandteilen des anorganischen Mischfaserprodukts angeordnet werden. Die anorganischen Faserflocken werden hierbei insbesondere durch Einblasen in den Fallschacht mit den Glaswollefasern vermischt. Alle mit dem erfindungsgemäßen anorganischen Mischfaserprodukt erzielbaren, oben dargestellten Vorteile werden ungeschmälert auch mit dem durch das erfindungsgemäße Verfahren zum Herstellen dieses anorganischen Mischfaserprodukts erzielten Produktes erzielt. Es wird daher ausdrücklich auf die oben erfolgte Diskussion dieser Vorteile verwiesen und ebenfalls darauf, daß das anorganische Mischfaserprodukt eine Mineralwolle sein kann, welche ebenfalls mit dem erfindungsgemäßen Verfahren herstellbar ist.

Der Fallschacht ist jener Ort/Bereich der zur Herstellung des erfindungsgemäßen anorganischen Mischfaserprodukts verwendeten Anlage bzw. Vorrichtung, an welchem die vom sogenannten Schleuderorgan, im TEL-Verfahren einem Schleuderring, ausgezogenen Glasfasern aus noch flüssiger Schmelze weiter ausgezogen, abgekühlt, verfestigt und mit Bindemittel beaufschlagt werden, bevor diese am Ende des Fallschachts auf einen Sammelförderer, i. d. R. ein Aufnahmeband, auftreffen und zu einem anorganischen Mischfaserprodukt zusammengeführt werden. Da das anorganische Mischfaserprodukterzeugnis in diesem Bereich seine endgültige Form noch nicht angenommen hat, ist es im Fallschacht besonders einfach, die anorganischen Faserflocken den Glaswollefasem beizumischen bzw. zuzuführen. Auf diese Weise läßt sich eine homogene Verteilung der anorganischen Faserflocken zwischen den Glaswollefasem auf besonders einfache Art und Weise erzielen.

Untersuchungen der Anmelderin haben ergeben, daß die gewünschte, im wesentlichen homogene Verteilung der anorganischen Faserflocken zwischen den Glaswollefasem auf besonders zuverlässige Weise durch ein Einblasen der anorganischen Faserflocken in den Fallschacht erreicht wird. Dies erklärt sich daraus, daß durch Aufbringen eines ausreichend kräftigen bzw. geeigneten Einblasstroms die anorganischen Faserflocken bis in die Tiefe des Querschnitts des Glaswollefaserstroms eingeblasen werden und sich nicht etwa beispielsweise nur mit Glaswollefasem in jeweils den äußeren Bereichen des Querschnitts des Glasfaserstroms vermischen.

In einer wiederum weiter bevorzugten Ausführungsform des erfindungsgemäßen Verfahrens ist vorgesehen, daß die anorganischen Faserflocken mit einem Bindemittel in Kontakt gebracht werden. Die anorganischen Faserflocken werden daher nicht allein mittels des an den Glaswollefasem bereits vorgesehenen Bindemittels mit den Glasfasern verbunden. Bevorzugt werden die anorganischen Faserflocken mit dem Bindemittel besprüht. Das Aufsprühen des Bindemittels ist zur Aufbringung des Bindemittels besonders geeignet, da der Sprühvorgang anders als andere Auftragsverfahren (beispielsweise das Tauchen der anorganischen Faserflocken im Bindemittel) ein Auftragen des Bindemittels in einer gewünschten Bindemitteldicke erlaubt. Ferner ist es durch Aufsprühen des Bindemittels auf einfache Weise möglich, den Vorgang des Auftragens in den kontinuierlich ablaufenden Herstellungsprozeß des anorganischen Mischfaserprodukts einzufügen. Dies erlaubt das Auftragen des Bindemittels, ohne in den oftmals bereits bestehenden TEL-Prozeß und die hierzu verwendete Anlage konstruktiv oder in den Ablauf mit besonderem Aufwand eingreifen zu müssen.

In einer wiederum weiter bevorzugten Ausführungsform des erfindungsgemäßen Verfahrens werden die anorganischen Faserflocken bevorzugt horizontal oberhalb des Bereichs der zur Durchführung des erfindungsgemäßen Verfahrens verwendeten Anlage, in welchem die Glaswollefasem mit dem Bindemittel besprüht werden, in den Fallschacht eingebracht, d.h. in den sog. Faserstrumpf eingeblasen. Der Vorteil dieser Ausführungsform besteht darin, daß sowohl die anorganischen Faserflocken als auch die Glasfasern im selben Verfahrensschritt jeweils mit Bindemittel versehen werden. Dies bedeutet keinen zusätzlichen Aufwand beim Benetzen der anorganischen Faserflocken mit dem Bindemittel. Bei dieser Art der Aufgabe der anorganischen Faserflocken durchläuft die Mischung aus frisch gebildeten Glaswollefasem und anorganischen Faserflocken zunächst einen Bereich laminarer Strömung, welcher anschließend in turbulente Strömung übergeht. Da sich Glaswollefasem und anorganische Faserflocken im Luftstrom bei diesen Bedingungen praktisch gleich verhalten, resultiert eine besonders homogene Durchdringung und intensive Vermischung. Gleichzeitig bedingt dies eine im wesentlichen homogene Benetzung der Glaswollefasern und der anorganischen Faserflocken in der anschließenden Bindemittelzugabe. Die Einblasung der anorganischen Faserflocken muss dabei so eingestellt sein, dass die anorganischen Faserflocken zwar in den Faserstrumpf eindringen, diesen aber nicht durchstoßen.

Aufgrund intensiver Homogenisierung kann die gemeinsame Bindemittelzugabe für die Glaswollefasem und die anorganischen Faserflocken auf das notwendige Minimum reduziert werden, insbesondere muss kein Bindemittel über jenes Maß hinaus eingesetzt werden, welches zur sicheren Benetzung der anorganischen Faserflocken erforderlich ist. Diese Reduzierung des Bindemitteleinsatzes bedingt wirtschaftliche und produktspezifische Vorteile durch Bindemitteleinsparungen, höhere Anwendungsgrenztemperaturen von beispielsweise 620 °C und verbesserte Brandeigenschaften. So könnte im Brandfall, d. h. wenn das mit dem erfindungsgemäßen Verfahren dieser Ausführungsform hergestellte anorganische Mischfaserprodukt Feuer ausgesetzt ist, eine unnötige Rauchentwicklung vermieden werden.

Alternativ kann das Bindemittel auch separat, d. h. unabhängig vom Benetzen der Glaswollefasem mit Bindemittel, aufgebracht werden. Dem erforderlichen apparativen Mehraufwand steht gegenüber, daß einerseits aufgrund des zusätzlichen, an den anorganischen Faserflocken vorgesehenen Bindemittels eine erhöhte Haftung zwischen den Glaswollefasern und den anorganischen Faserflocken erzielt wird. Im erfindungsgemäßen anorganischen Mischfaserprodukt lassen sich gezielt Bereiche unterschiedlicher Bindemittelgehalte einstellen bei insgesamt reduziertem Bindemitteleinsatz. Zusätzlich kann auch ein zweiter Typ eines Bindemittels zum Einsatz kommen. Die Entscheidung hierüber trifft der Fachmann aufgrund seiner Erfahrung und in Abhängigkeit der gegebenen Rahmenbedingungen und Materialanforderungen. Die Ausführungen zu den Auswirkungen eines reduzierten Bindemitteleinsatzes gelten in analoger Weise.

Im erfindungsgemäßen Verfahren werden in einer weiter bevorzugten Ausführungsform anorganische Faserflocken eingesetzt, welche aus Recycling-Material durch einen Vliesaufschluß, ein "Öffnen des Vlieses", erhalten wird bzw. wurde. Die hiermit verbundenen Vorteile wie Kosteneinsparung wurden oben bereits diskutiert. Zur Vermeidung von Wiederholungen wird an dieser Stelle daher auf ihre obige Diskussion ausdrücklich verwiesen.

Die erfindungsgemäße Aufgabe wird ferner durch ein Erzeugnis gemäß dem Anspruch 15 gelöst, welches mit dem erfindungsgemäßen Verfahren erzeugt wurde. Da die Vorteile, welche mit dem erfindungsgemäßen Erzeugnis verbunden sind, ungeschmälert jenen entsprechen, welche im Zusammenhang mit dem erfindungsgemäßen Verfahren sowie dem erfindungsgemäßen anorganischen Mischfaserprodukt oben bereits diskutiert wurden, wird an dieser Stelle ausdrücklich auf die oben stehende Diskussion verwiesen.

Die erfindungsgemäße Aufgabe wird ferner auch durch die erfindungsgemäße Vorrichtung bzw. Anlage zur Durchführung des erfindungsgemäßen Verfahrens gemäß dem Anspruch 16 gelöst. Ein Beispiel einer solchen Vorrichtung ist in der unten stehenden Beschreibung der Zeichnung erläutert. Da die Vorteile, welche mit der erfindungsgemäßen Vorrichtung bzw. Anlage verbunden sind, ungeschmälert jenen entsprechen, welche im Zusammenhang mit dem erfindungsgemäßen Verfahren sowie dem erfindungsgemäßen anorganischen Mischfaserprodukt oben bereits diskutiert wurden, wird an dieser Stelle ausdrücklich auf die oben stehende Diskussion verwiesen.

Zum besseren Verständnis der vorliegenden Erfindung wird diese mit Bezug auf die angefügte Zeichnung detailliert erläutert. In der Zeichnung gilt:
- Fig. 1: zeigt eine schematische Darstellung einer Anlage zum Erzeugen des erfindungsgemäßen anorganischen Mischfaserprodukts in einem erfindungsgemäßen Herstellungsverfahren; und
- Fig. 2: zeigt eine schematische Darstellung einer exemplarischen Flockeneinblasung in den Glaswollefaserstrumpf.

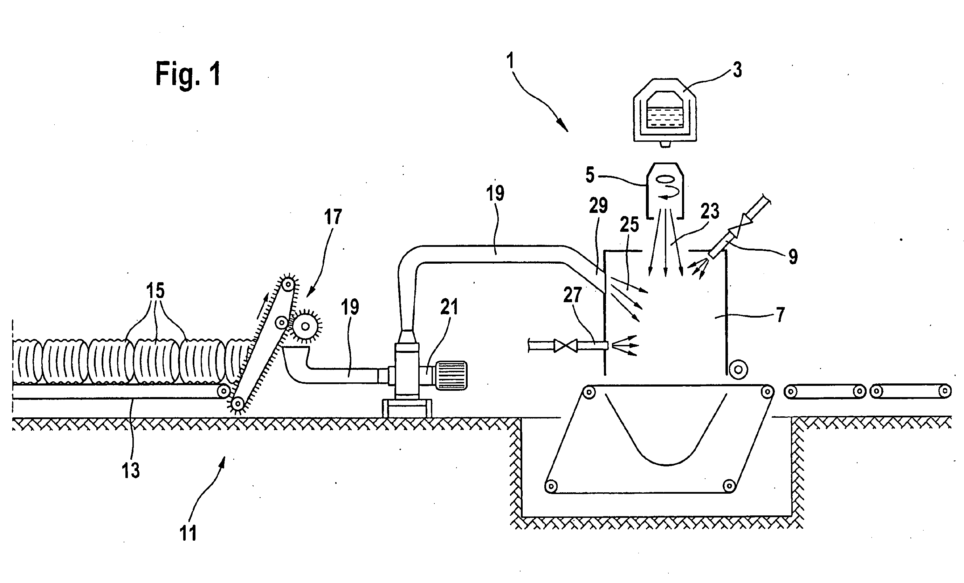

Fig. 1 zeigt eine erfindungsgemäße Anlage 1 zum Herstellen des erfindungsgemäßen anorganischen Mischfaserprodukts mittels des erfindungsgemäßen Herstellungsverfahrens. Die Anlage 1 entspricht im Wesentlichen einer Anlage zur Durchführung des an sich bekannten TEL-Verfahrens mit einer Schmelzwanne 3, einem Schleuderorgan bzw. einer TEL-Maschine 5 und einem Fallschacht 7. Die Schmelzwanne 3 dient zum Schmelzen der für das herzustellende anorganische Mischfaserprodukt erforderlichen Glasanteile, welche aus der Schmelzwanne 3 in geschmolzenem Zustand in das Schleuderorgan 5 gelangen. Im Schleuderorgan 5, welches auch als Spinner bekannt ist, wird die geschmolzene Glasmasse zentrifugiert, woraufhin aus dem Schleuderorgan 5 Glasfasern nach unten hin in den Fallschacht 7 hinein austreten. Dem Strom bzw. Stumpf 23 der Glaswollefasern wird im Fallschacht 7 Bindemittel aus einem Verteiler 9 zugeführt.

Erfindungsgemäß ist diese Anlage 1, welche die Bauteile 3, 5, 7 und 9 aufweist, um eine Zufuhrvorrichtung 11 zum Zuführen von Steinwolleflocken 25 als ein Beispiel für anorganische Faserflocken in den Fallschacht 7 erweitert, wobei durch das Zuführen von Steinwolleflocken 25 als Beispiel für anorganische Faserflocken in den Stumpf 23 der Glaswollefasern hinein ein anorganisches Mischfaserprodukt entsteht, welches eine Mineralwolle ist. Die Zufuhrvorrichtung 11 weist eine Transportvorrichtung 13 für Steinwolleballen 15 auf, wobei die Steinwolle der Steinwolleballen 15 Recyclingmaterial sein kann. Die Steinwolleballen 15 werden mittels der Transportvorrichtung 13 in Richtung zum Fallschacht in eine Zerkleinerungseinrichtung bzw. Ballen- bzw. Vliesöffnereinrichtung 17 bewegt. In der Ballen- bzw. Vliesöffnereinrichtung 17 werden die Steinwolleballen in kleine Flocken geeigneter Größe zerrupft, die anschließend in eine Zufuhrleitung 19 fallen bzw. in diese eingesaugt werden. In der Zufuhrleitung 19 werden die Flocken bzw. Steinwolleflocken 25 mittels eines Ventilators oder Gebläses 21 beschleunigt, um aus einer Mündung der Einrichtung 29 zum Zuführen der Steinwolleflocken 25 in den Fallschacht 7 eingeblasen zu werden.

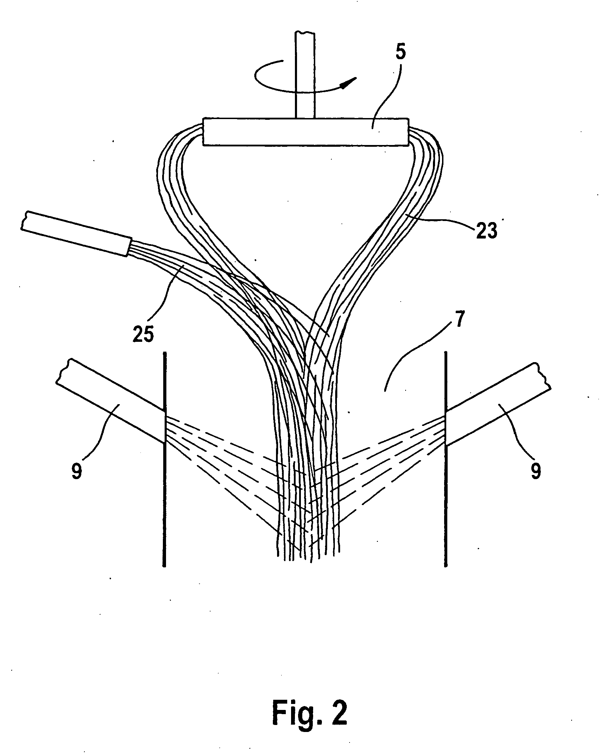

Die in den Fallschacht 7 eingeblasenen Steinwolleflocken 25 werden entsprechend der in Fig. 2 dargestellten Prinzipskizze einer bevorzugten Ausführungsform hierbei in den aus frisch hergestellten Glaswollefasern gebildeten Faserstrumpf 23 derart mit einer Geschwindigkeit und einem Impuls eingeblasen, daßs der Strumpf nicht durchstoßen wird; die Steinwolleflocken 25 werden vielmehr im und mittels des Faserstrumpfs 23 geeignet umgelenkt. Zur besseren homogen Verteilung der Steinwolleflocken 25 können diese auch über mehrere Mündungen zum Zuführen eingebracht werden. Aufgrund der räumlichen Anordnung der Einblasung oder Einbringung in unmittelbarer Nähe der Zerfaserung des Glasanteils in Glaswollefasern erfolgt die Einbringung noch im Bereich der laminaren Strömung. Aufgrund des im Anschluß an die Phase der laminaren Strömung erfolgenden Übergangs in eine turbulente Strömung kommt es ohne weiteres Zutun zu einer intensiven Vermischung von Glaswollefasem und Steinwolleflocken 25. Mit dem anschließenden Bindemittelauftrag über bspw. einen Bindemittelring, hier dargestellt durch zwei Düsen 9 wird eine gleichförmige Bindemittelverteilung im Strom aus Glaswollefasem und Steinwolleflocken 25 sichergestellt, was zu einer guten Vernetzung der Glaswollebestandteile und Steinwolleflocken 25 im Endprodukt führt.

Im unteren Bereich des Fallschachtes 7 wird das im Fallschacht 7 erzeugte Produkt aus Glaswolle und Steinwolleflocken 25 mittels eines Sammelförderers, i. d. R. ein perforiertes, abgesaugtes Aufnahmeband, als Rohvlies abgelegt (siehe Fig. 1) und zur nicht dargestellten, weiteren Verarbeitung transportiert.

Die erfindungsgemäße Anlage 1 kann ferner eine zusätzliche Aufschlußeinrichtung (nicht dargestellt) aufweisen, mittels welcher die aus der Ballen- bzw. Vliesöffnereinrichtung 17 erhaltenen Steinwolleflocken 25 in einem feiner abstimmbaren Vorgang auf eine vorbestimmte Flockengröße von beispielsweise 10 mm sicher zerkleinert wird.

Wie in Fig. 1 ferner dargestellt ist, kann eine Bindemittelzufuhr nicht nur über die Düse 9 oder eine Mehrzahl solcher Düsen 9 erfolgen. Eine Bindemittelzufuhr ist auch über Düsen 27 möglich. Die Düsen 27 liegen wie in Fig. 1 gezeigt hinter (betrachtet mit Blick in Richtung des Produktionsablaufs) dem Ort der Einbringung der Steinwolleflocken 25 in den Fallschacht 7. Die Düsen 27 liegen daher unterhalb der Mündung der Einrichtung 29 zum Zuführen der Steinwolleflocken 25 in den Fallschacht 7. Eine solche Bindemittelzufuhr über Düsen 27 kann ergänzend zur Zufuhr aus den Düsen 9 und somit auf andere Weise erfolgen, als dies mittels der Düsen 9 wie in Fig. 2 gezeigt erfolgt. Auch eine Bindemittelzufuhr allein über die Düsen 27 ist erfindungsgemäß in dem Maße vorgesehen, in welchem die gewünschte Homogenität der Verteilung auch bei gegenüber Fig. 2 veränderter Bindemittelzufuhr erhalten bleibt.

Eine Verwendung des erfindungsgemäßen anorganischen Mischfaserprodukts ist überall dort vorteilhaft möglich, wo die Temperatureigenschaften von Glaswolle nicht ausreichen oder ein Schmelzpunkt größer 1000 °C gefordert ist. Dies trifft insbesondere auf die Produktgruppen Rohrschalen, Deckenplatten, Lüftungsleitungen und Flachdachplatten zu.

Vorteilhafter Weise sind sowohl die Glaswollefasern als auch die Steinwolleflocken aus in einem physiologischen Milieu löslichen Mineralfasern gebildet, wobei diese den Anforderungen der europäischen Richtlinie 97/69/EG und/oder den Anforderungen der deutschen Gefahrstoffverordnung Abs. IV Nr. 22 entsprechen. Hierdurch ist eine gesundheitliche Unbedenklichkeit des erfindungsgemäßen anorganischen Mischfaserprodukts bei Herstellung, Verarbeitung, Nutzung und Entsorgung vorteilhaft gewährleistet. Beispielhafte Zusammensetzungen für eine biolösliche Glaswolle sind beispielsweise in der EP 0 412 878 B2, für eine biolösliche Steinwolle beispielsweise in der WO 96/16913 A1 angegeben.

Die vorliegende Erfindung schlägt somit erstmals ein anorganisches Mischfaserprodukt mit guten Dämmeigenschaften und guter Feuerfestigkeit vor, wobei das anorganische Mischfaserprodukt sowohl Glasfasern als auch anorganische Faserflocken aufweist, und wobei die anorganischen Faserflocken im wesentlichen homogen zwischen den Glasfasern angeordnet sind. Die vorliegende Erfindung schlägt ferner ein Verfahren zum Herstellen des erfindungsgemäßen anorganischen Mischfaserprodukts, sowie eine Anlage zum Durchführen des erfindungsgemäßen Verfahrens vor. Die Erfindung gibt ferner ein aus dem erfindungsgemäßen anorganischen Mischfaserprodukt hergestelltes Produkt an.

## Patentansprüche

1. Anorganisches Mischfaserprodukt, vorzugsweise für die Herstellung von Dämmaterial, welche zumindest Glaswolle (23) in Faserform, anorganische Faserflocken (25) sowie Bindemittel aufweist, wobei die anorganischen Faserflocken (25) im wesentlichen homogen zwischen den Glaswollefasern (23) des anorganischen Mischfaserprodukts verteilt sind.

2. Anorganisches Mischfaserprodukt nach Anspruch 1, bei welcher die anorganischen Faserflocken (25) einen Durchmesser von mehr als 5 mm und weniger als 30 mm, insbesondere zwischen 8 mm und 12 mm aufweisen.

3. Anorganisches Mischfaserprodukt nach einem der vorangegangenen Ansprüche, wobei zumindest ein Teil der anorganischen Faserflocken (25) aus recyceltem Material erhalten wurden.

4. Anorganisches Mischfaserprodukt nach wenigstens einem der vorangegangenen Ansprüche, wobei der Volumenanteil der anorganischen Faserflocken (25) an der erfindungsgemäßen Mineralwolle etwa 10 Vol.% bis etwa 87,5 Vol.%, insbesondere zwischen 30 Vol.% und 87,5 Vol.%, und ganz insbesondere zwischen 50 Völ.-% und 87,5 Vol.-% beträgt.

5. Anorganisches Mischfaserprodukt nach wenigstens einem der vorangegangenen Ansprüche, wobei die anorganischen Faserflocken (25) Steinwolleflocken aufweisen.

6. Anorganisches Mischfaserprodukt nach wenigstens einem der vorangegangenen Ansprüche, wobei die anorganischen Faserflocken (25) Flocken aus E-Glas aufweisen.

7. Anorganisches Mischfaserprodukt nach wenigstens einem der vorangegangenen Ansprüche, wobei die anorganischen Faserflocken (25) Flocken aus Keramikfasern aufweisen.

8. Erzeugnis mit einem anorganischen Mischfaserprodukt nach einem der Ansprüche 1 bis 7.

9. Verfahren zum Herstellen eines anorganischen Mischfaserprodukts aus Glaswolle (23) und anorganischen Faserflocken (25), vorzugsweise nach einem der Ansprüche 1 bis 7, wobei die Herstellung der Glaswolle (23) im wesentlichen in einem TEL-Verfahren erfolgt, und wobei die anorganischen Faserflocken (25) der Glaswolle (23) in einem Fallschacht (7), insbesondere durch Einblasen der anorganischen Faserflocken (25) in den Fallschacht (7), derart zugegeben werden, daß die anorganischen Faserflocken (25) im wesentlichen homogen zwischen den Glaswollefasern (23) des anorganischen Mischfaserprodukts verteilt werden.

10. Verfahren nach Anspruch 9, wobei die anorganischen Faserflocken (25) mit einem Bindemittel in Kontakt gebracht werden.

11. Verfahren nach einem der Ansprüche 9 bis 10, wobei die anorganischen Faserflocken (25) mit dem Bindemittel besprüht werden.

12. Verfahren nach wenigstens einem der Ansprüche 9 bis 11, wobei die anorganischen Faserflocken (25) oberhalb des Bereichs, in welchem sie mit dem Bindemittel besprüht werden, in den Fallschaft (7) eingebracht werden.

13. Verfahren nach wenigstens einem der Ansprüche 9 bis 12, wobei die anorganischen Faserflocken (25) und die Glaswollefasem (23) gemeinsam mit Bindemittel benetzt werden.

14. Verfahren nach wenigstens einem der Ansprüche 9 bis 13, wobei die anorganischen Faserflocken (25) durch einen Aufschluß von recyceltem Material erhalten wurden.

15. Erzeugnis, welches mit einem Verfahren nach einem der Ansprüche 9 bis 14 erzeugt wurde.

16. Vorrichtung (1) zum Durchführen des Verfahrens nach wenigstens einem der Ansprüche 9 bis 14 in einem TEL-Prozeß, wobei die Vorrichtung (1) jeweils wenigstens eine Schmelzwanne (3), ein Schleuderorgan (5) und einen Fallschacht (7) aufweist, **dadurch gekennzeichnet, daß** die Vorrichtung (1) ferner eine Zufuhrvorrichtung (11) für anorganische Faserflocken (25) in den wenigstens einen Fallschacht (7) aufweist.

17. Vorrichtung nach Anspruch 16, welche eine Vorrichtung (17) zum Erzeugen der anorganischen Faserflocken (25) aufweist.

## Claims

1. Anorganic mixed fiber product, preferably for the manufacture of insulation material, which includes at least glass wool (23) in fibers, anorganic fiber flakes (25) and binder, wherein the anorganic fiber flakes (25) are distributed substantially homogeneously between the glass wool fibers (23) of the anorganic mixed fiber product.

2. Anorganic mixed fiber product in accordance with claim 1, wherein the anorganic fiber flakes (25) have a diameter of more than 5 mm and less than 30 mm, in particular between 8 mm and 12 mm.

3. Anorganic mixed fiber product in accordance with any one of the preceding claims, wherein at least part of the anorganic fiber flakes (25) was obtained from recycled material.

4. Anorganic mixed fiber product in accordance with at least one of the preceding claims, wherein the content by volume of the anorganic fiber flakes (25) of the mineral wool of the invention amounts to about 10%(vol.) to about 87.5%(vol.), particularly between 30%(vol.) and 87.5%(vol.), and even more particularly between 50%(vol.) and 87.5%(vol.).

5. Anorganic mixed fiber product according to at least one of the preceding claims, wherein the anorganic fiber flakes (25) comprise rock wool flakes.

6. Anorganic mixed fiber product according to at least one of the preceding claims, wherein the anorganic fiber flakes (25) comprise flakes made of E-glass.

7. Anorganic mixed fiber product according to at least one of the preceding claims, wherein the anorganic fiber flakes (25) comprise flakes made of ceramic fibers.

8. Product including an anorganic mixed fiber product according to one of the claims 1 to 7.

9. Method for manufacturing an anorganic mixed fiber product of glass wool (23) and anorganic fiber flakes (25), preferably in accordance with any one of claims 1 to 7, wherein the manufacture of the glass wool (23) essentially takes place in a TEL process, and wherein the anorganic fiber flakes (25) of the glass wool (23) are added into a chute (7), in particular by injecting the anorganic fiber flakes (25) into the chute (7), such that the anorganic fiber flakes (25) are distributed substantially homogeneously between the glass wool fibers (23) of the anorganic mixed fiber product.

10. Method in accordance with claim 9, wherein the anorganic fiber flakes (25) are brought into contact with a binder.

11. Method in accordance with any one of claims 9 to 10, wherein the anorganic fiber flakes (25) are sprayed with the binder.

12. Method in accordance with at least one of claims 9 to 11, wherein the anorganic fiber flakes (25) are introduced into the chute (7) above the range in which they are sprayed with the binder.

13. Method in accordance with at least one of claims 9 to 12, wherein the anorganic fiber flakes (25) and the glass wool fibers (23) are jointly wetted with binder.

14. Method in accordance with at least one of claims 9 to 13, wherein the anorganic fiber flakes (25) were obtained by opening up recycled material.

15. Product which was manufactured by a method in accordance with any one of claims 9 to 14.

16. Apparatus (1) for carrying out the method in accordance with at least one of claims 9 to 14 in a TEL process, wherein the apparatus (1) respectively comprises at least a melting end (3), a spinner (5), and a chute (7), **characterized in that** the apparatus (1) further includes a feeding device (11) for anorganic fiber flakes (25) in the at least one chute (7).

17. Apparatus in accordance with claim 16, comprising a device (17) for producing the anorganic fiber flakes (25).

## Revendications

1. Produit de fibres mixtes anorganiques, de préférence pour la production de matériau d'insonorisation, qui présente au moins de la laine de verre (23) sous forme de fibres, des flocons de fibres anorganiques (25) et du liant, dans lequel les flocons de fibres anorganiques (25) sont répartis de façon essentiellement homogène entre les fibres de laine de verre (23) du produit de fibres mixtes anorganiques.

2. Produit de fibres mixtes anorganiques selon la revendication 1, dans lequel les flocons de fibres anorganiques (25) présentent un diamètre de plus de 5 mm et de moins de 30 mm, en particulier, entre 8 mm et 12 mm.

3. Produit de fibres mixtes anorganiques selon l'une des revendications précédentes, dans lequel au moins une partie des flocons de fibres anorganique (25) provient de matériau recyclé.

4. Produit de fibres mixtes anorganiques selon au moins l'une des revendications précédentes, dans lequel la proportion en volume des flocons de fibres anorganiques (25) à la laine minérale selon l'invention est d'environ 10 % en volume à environ 87,5 % en volume, en particulier entre 30 % en volume et 87,5 % en volume et tout particulièrement, entre 50 % en volume et 87,5 % en volume.

5. Produit de fibres mixtes anorganiques selon au moins l'une des revendications précédentes, dans lequel les flocons de fibres anorganiques (25) présentent des flocons de laine de roche.

6. Produit de fibres mixtes anorganiques selon au moins l'une des revendications précédentes, dans lequel les flocons de fibres anorganiques (25) présentent des flocons de verre E.

7. Produit de fibres mixtes anorganiques selon au moins l'une des revendications précédentes, dans lequel les flocons de fibres anorganiques (25) présentent des flocons de fibres de céramique.

8. Article comportant un produit de fibres mixtes anorganiques selon l'une des revendications 1 à 7.

9. Procédé de production d'un produit de fibres mixtes anorganiques à partir de laine de verre (23) et de flocons de fibres anorganiques (25), de préférence selon l'une des revendications 1 à 7, dans lequel la production de la laine de verre (23) s'effectue essentiellement dans un procédé TEL et dans lequel les flocons de fibres anorganiques (25) de la laine de verre (23) sont ajoutés dans une trémie d'alimentation (7) en particulier par soufflage des flocons de fibres anorganiques (25) dans la trémie d'alimentation (7) de telle sorte que les flocons de fibres anorganiques (25) soient répartis de façon essentiellement homogène entre les fibres de laine de verre (23) du produit de fibres mixtes anorganiques.

10. Procédé selon la revendication 9, dans lequel les flocons de fibres anorganiques (25) sont mis en contact avec un liant.

11. Procédé selon l'une des revendications 9 à 10, dans lequel les flocons de fibres anorganiques (25) sont pulvérisés avec le liant.

12. Procédé selon au moins l'une des revendications 9 à 11, dans lequel les flocons de fibres anorganiques (25) sont introduits dans la trémie d'alimentation (7) au-dessus de la zone dans laquelle ils sont pulvérisés avec le liant.

13. Procédé selon au moins l'une des revendications 9 à 12, dans lequel les flocons de fibres anorganiques (25) et les fibres de laine de verre (23) sont mouillés conjointement avec le liant.

14. Procédé selon au moins l'une des revendications 9 à 13, dans lequel les flocons de fibres anorganiques (25) ont été obtenus par un traitement de matériau recyclé.

15. Article qui a été produit avec un procédé selon l'une des revendications 9 à 14.

16. Dispositif (1) de réalisation du procédé selon au moins l'une des revendications 9 à 14, dans un procédé TEL dans lequel le dispositif (1) présente au moins un bassin de fusion (3), un organe de centrifugation (5) et une trémie d'alimentation (7), **caractérisé en ce que** le dispositif (1) présente en outre un dispositif d'acheminement (11) pour des flocons de fibres anorganiques (25) dans l'au moins une trémie d'alimentation (7).

17. Dispositif selon la revendication 16 qui présente un dispositif (17) pour produire les flocons de fibres anorganiques (25).
